(19) Europäisches Patentamt

European Patent Office

Office européen des brevets

(11) EP 0 646 553 B1

## (12) EUROPÄISCHE PATENTSCHRIFT

(45) Veröffentlichungstag und Bekanntmachung des Hinweises auf die Patenterteilung:
**30.10.1996 Patentblatt 1996/44**

(21) Anmeldenummer: **94112621.1**

(22) Anmeldetag: **12.08.1994**

(51) Int. Cl.[6]: **C04B 28/14**, C04B 38/02
// (C04B28/14, 22:00, 22:06, 22:10), (C04B28/14, 7:00, 22:00, 22:10)

(54) **Trockene Gipsmörtelmischung, Herstellung eines geschäumten Baustoffes und seine Verwendung**

Dry gypsum-mortar mixture, manufacture of a foamed building product and its use

Mélange de mortier de gypse sec, préparation d'un élement de construction en mousse et son utilisation

(84) Benannte Vertragsstaaten:
**AT CH DE DK LI SE**

(30) Priorität: **29.09.1993 DE 4333115**

(43) Veröffentlichungstag der Anmeldung:
**05.04.1995 Patentblatt 1995/14**

(73) Patentinhaber: **Gebr. Knauf Westdeutsche Gipswerke KG D-97343 Iphofen (DE)**

(72) Erfinder:
- **Hummel, Hans-Ulrich, Dr. Dipl.-Chem. D-97348 Markt Einersheim (DE)**
- **Kumar, René, Dr. Dipl.-Chem. D-97318 Kitzingen (DE)**
- **Ruf, Heinz, Dr, Dipl.-Phys. D-97350 Mainbernheim (DE)**

(74) Vertreter: **Werner, Hans-Karsten, Dr.Dipl.-Chem. et al Patentanwälte von Kreisler-Selting-Werner, Deichmannhaus (Bahnhofsvorplatz) 50667 Köln (DE)**

(56) Entgegenhaltungen:
**EP-A- 0 262 377          DE-A- 2 356 524
FR-A- 719 830            US-A- 1 687 285
US-A- 1 720 032**

- **DATABASE WPI Section Ch, Week 9427, Derwent Publications Ltd., London, GB; Class C07, AN 94-221704 & JP-A-6 157 (SANKYO CO) 3. Juni 1994**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Gegenstand der vorliegenden Erfindung ist eine trockene Gipsmörtelmischung zur Herstellung eines geschäumten Gipsbaustoffes, ein Verfahren zur Herstellung eines geschäumten Gipsbaustoffes sowie die Verwendung der trockenen Gipsmörtelmischung als Leichtbaustoff zur Dämmung, Isolierung, Verfüllung sowie zum Ausgleich von Unebenheiten im Boden-, Wand- und Deckenbereich.

Es ist bekannt, geschäumte Gipsbaustoffe herzustellen, wobei das Aufschäumen dadurch erfolgt, daß man dem mit Wasser angerührten Gipsbrei Gase oder gasentwickelnde Chemikalien zusetzt; vgl. DE-A-40 08 570.

Weiterhin ist bekannt, dem Gipsbrei vorgefertigten Schaum beizumischen und das so entstehende Gemisch abbinden zu lassen. Ein spezielles Verfahren zur Herstellung derartig aufgeschäumter Gipssuspensionen beschreibt die DE-A-39 08 964. Ein spezielles Verfahren unter Verwendung von Tensidschaum beschreibt EP-A-0 490 160. Ein weiteres Verfahren zur Herstellung von Schaumgips beschreiben die DE-A-29 40 785 und die entsprechende EP-B-0 026 905. Bei diesem Verfahren wird Polyvinylalkohol und ein Polyurethan zugegeben, wodurch eine feine und gleichmäßige Porenstruktur erzielt wird. Zur Verbesserung der Härte dieses Schaumgipses werden 0,05 bis 2 Gew.-% Borsäure zugesetzt.

Ein wesentlicher Nachteil der bekannten Produkte aus Schaumgips ist, daß sie vorgefertigt werden müssen, so daß sie bezüglich der Dimensionierung festgelegt sind. Es ist somit nicht möglich, die geschäumten Gipsbaustoffe erst vor Ort herzustellen, so daß sie erst vor Ort vergossen oder verspritzt werden können. Erst dann besteht die Möglichkeit, Schaumgips optimal zur Dämmung, Isolierung, Verfüllung sowie zum Ausgleich von Unebenheiten im Boden-, Wand- und Deckenbereich zu verwenden.

Die Erfindung hat sich die Aufgabe gestellt, eine trockene Gipsmörtelmischung zur Verfügung zu stellen, mit welcher geschäumte Gipsbaustoffe vor Ort hergestellt werden können, so daß sie dort vergossen oder verspritzt werden können. Eine derartige trockene Gipsmörtelmischung ist leichter zu transportieren, leichter handzuhaben und flexibler einzusetzen. All dies ist aber nur möglich, wenn die Gipsmörtelmischung zuverlässig und gleichmäßig aufgeschäumt wird. Dies ist bisher nicht gelungen mit vorgefertigtem Tensidschaum oder Einblasen von Gasen.

Es wurde jetzt gefunden, daß es möglich ist, eine trockene Gipsmörtelmischung zur Herstellung eines geschäumten Gipsbaustoffes zur Verfügung zu stellen, welche besteht aus 88 bis 96 Gew.-% abbindefähiger Calciumsulfate, 2 bis 9 Gew.-% eines Alkalibicarbonats, 0,5 bis 2 Gew.-% Borsäure und 0,5 bis 3 Gew.-% gelöschtem Kalk oder Zement sowie gegebenenfalls zusätzlich bis zu 1 Gew.-% Luftporenbildner, Fließmittel und/oder Verzögerer. Als abbindefähige Calciumsulfate kommen vorzugsweise solche in Frage, die überwiegend aus α-Halbhydrat oder überwiegend aus Anhydrit bestehen, da diese zu festeren Produkte führen als β-Halbhydrat. Sofern jedoch keine starke mechanische Beanspruchung zu erwarten ist, kann auch β-Halbhydrat als abbindefähiges Calciumsulfat verwendet werden.

Durch den Zusatz von Alkalibicarbonat, vorzugsweise Kaliumbicarbonat, und Borsäure entsteht beim Anrühren auf chemischem Wege eine Gasbildung, die zu einer porigen Schaumstruktur führt.

Aufgrund der speziellen Säurewirkung der Borsäure, nämlich der Bildung von Tetrahydroxyborat, ist eine Reaktion zur Gasbildung auch noch im neutralen oder schwach alkalischen Bereich möglich

$$(B(OH)_3 + H_2O \rightarrow H^+ + B(OH)_4^-).$$

Eine gewünschte Anregung von z.B. Anhydrit ist dadurch auch alkalisch möglich.

Die erfindungsgemäße Gipsmörtelmischung kann gegebenenfalls übliche Luftporenbildner, Fließbildner und/oder Verzögerer enthalten, wodurch sich die Verarbeitungseigenschaften und die endgültigen Eigenschaften des geschäumten Gipsbaustoffes modifizieren und optimieren lassen.

Weiterhin wurde festgestellt, daß besonders gute und gleichmäßige Ergebnisse erzielt werden, wenn die Borsäure die gleiche oder eine geringere Korngröße aufweist als das eingesetzte Calciumsulfat. Sofern die Borsäure eine deutlich gröbere Korngröße aufweist als das eingesetzte Calciumsulfat, kommt es zur Bildung von ungleichmäßigen großen Poren und damit zu deutlich verschlechterten Eigenschaften des Endprodukts. Die Mahlfeinheit der eingesetzten Borsäure kann somit zur Steuerung des Porenvolumens benutzt werden. Viele kleine gleichmäßige Poren führen zu einem Festigkeitsanstieg des Schaumgipses.

In den nachfolgenden Beispielen sind die erfindungsgemäße Gipsmörtelmischung und die Eigenschaften der daraus herstellbaren geschäumten Gipsbaustoffe näher beschrieben.

### Beispiel 1

95 Gew.-Teile α-Gips wurden mit 1 Gew.-Teil Hochofenzement, 1 Gew.-Teil Borsäure und 3 Gew.-Teilen Kaliumbicarbonat vermischt. Die Borsäure war ungemahlene Handelsware mit einer Korngrößenverteilung, die über der des α-Gipses lag. Diese Gipsmörtelmischung wurde mit Wasser im Wasser/Feststoff/Verhältnis 0,30 angerührt, wobei ein gleichmäßig aufgeschäumter Gipsbaustoff entstandt. Die Dichte lag bei 1,1 g/cm³, die Biegezugfestigkeit lag bei 1,2 N/mm² und die Druckfestigkeit bei 3,2 N/mm². Das Porenvolumen lag durchschnittlich bei etwa 2 mm.

## Beispiel 2

In analoger Weise wie in Beispiel 1 wurde eine trockene Gipsmörtelmischung hergestellt aus 93 Gew.-Teilen α-Gips, 1 Gew.-Teil Hochofenzement, 1 Gew.-Teil Borsäure (ungemahlen) und 5 Gew.-Teilen Bicarbonat. Diese Gipsmörtelmischung wurde mit Wasser angerührt im Wasser/Feststoff/Verhältnis 0,30. Der ausgehärtete Gipskörper hatte eine Dichte von 0,93 g/cm$^3$, eine Biegezugfestigkeit von 1,0 N/mm$^2$ und eine Druckfestigkeit von 0,5 N/mm$^2$.

## Beispiel 3

In analoger Weise wie in Beispiel 1 beschrieben, wurden 92 Gew.-Teile α-Gips vermischt mit 2 Teilen Hochofenzement, 1 Teil Borsäure und 5 Gew.-Teilen Bicarbonat. Die Borsäure war zuvor vermahlen auf eine Korngröße unter 0,063 mm. Nach dem Anrühren mit Wasser im Wasser/Feststoff/Verhältnis 0,30 entstand ein aufgeschäumter Gipskörper mit einer Dichte von 1,3 g/cm$^3$, eine Biegezufestigkeit von 1,5 N/mm$^2$ und einer Druckfestigkeit von 3,3 N/mm$^2$. Der durchschnittliche Durchmesser der Luftporen betrug nur noch 0,5 mm.

## Beispiel 4

In analoger Weise wie in Beispiel 1 beschrieben, wurde eine trockene Gipsmörtelmischung hergestellt aus 92 Gew.-Teilen α-Gips, 2 Gew.-Teilen Hochofenzement, 1 Gew.-Teil Borsäure, 5 Gew.-Teilen Bicarbonat und 0,1 Gew.-Teil Fließmittel (Melmet). Die Borsäure war wiederum feinvermahlen auf einer Korngröße kleiner 0,063 mm. Diese Gipsmörtelmischung wurde mit Wasser angerührt im Wasser/Feststoff/Verhältnis 0,28. Der aufgeschäumte, abgebundene Gipskörper wies auf eine Dichte von 1,3 g/cm$^3$, eine Biegezugfestigkeit von 1,4 N/mm$^2$ und eine Druckfestigkeit von 3,5 N/mm$^2$.

## Beispiel 5

In analoger Weise wie in Beispiel 1 beschrieben, wurde eine trockene Gipsmörtelmischung hergestellt aus 92 Gew.-Teilen α-Gips, 2 Gew.-Teilen Hochofenzement, 1 Gew.-Teil Borsäure (feinvermahlen), 5 Gew.-Teilen Kaliumbicarbonat und 0,005 Gew.-Teilen Luftporenbildner (Hostupur). Diese Gipsmörtelmischung wurde mit Wasser angerührt im Wasser/Feststoff/Verhältnis 0,30. Der abgebundene, aufgeschäumte Gipskörper besaß eine Dichte von 0,98 g/cm$^3$, eine Biegezugfestigkeit von 0,6 N/mm$^2$ und eine Druckfestigkeit von 1,1 N/mm$^2$. Die durchschnittliche Größe der Luftporen betrug 0,5 mm. Der zunächst gebildete Schaum war sehr stabil. Die Restfeuchtigkeit des abgebundenen Materials betrug nach 24 Stunden noch 10,5 %.

Der in den Beispielen verwendete α-Gips besaß eine Korngrößenverteilung zwischen 1 und 90 μm, wie sie beim Vermahlen von α-Gips entsteht.

## Patentansprüche

1. Trockene Gipsmörtelmischung zur Herstellung eines geschäumten Gipsbaustoffes, bestehend aus 88 bis 96 Gew.-% abbindendefähiger Calciumsulfate, 2 bis 9 Gew.-% eines Alkalibicarbonats, 0,5 bis 2 Gew.-% Borsäure und 0,5 bis 3 Gew.-% gelöschtem Kalk oder Zement sowie gegebenenfalls zusätzlich bis zu 1 Gew.-% Luftporenbildner, Fließmittel und/oder Verzögerer.

2. Gipsmörtelmischung gemäß Anspruch 1, dadurch gekennzeichnet, daß das Calciumsulfat überwiegend aus α-Halbhydrat besteht.

3. Gipsmörtelmischung gemäß Anspruch 1, dadurch gekennzeichnet, daß das Calciumsulfat überwiegend aus Anhydrit besteht.

4. Gipsmörtelmischung gemäß einem der Ansprüch 1 bis 3, dadurch gekennzeichnet, daß das Alkalibicarbonat Kaliumbicarbonat ist.

5. Gipsmörtelmischung gemäß einem der Ansprüche 1 bis 4, dadurch gekennzeichnet, daß die Borsäure die gleiche oder eine geringere Korngröße aufweist als das Calciumsulfat.

6. Verfahren zur Herstellung eines geschäumten Gipsbaustoffes, dadurch gekennzeichnet, daß eine trockene Gipsmörtelmischung gemäß einem der Ansprüche 1 bis 5 mit Wasser angerührt und danach vergossen oder verspritzt wird.

7. Verwendung einer trockenen Gipsmörtelmischung gemäß einem der Ansprüche 1 bis 5 als Leichtbaustoff zur Dämmung und Isolierung, Verfüllung und sowie zum Ausgleich von Unebenheiten im Boden-, Wand- und Deckenbereich.

## Claims

1. A dry gypsum mortar composition for the preparation of a foamed gypsum building material, consisting of from 88 to 96% by weight of setting calcium sulfates, from 2 to 9% by weight of an alkali hydrogencarbonate, from 0.5 to 2% by weight of boric acid, and from 0.5 to 3% by weight of lime hydrate or cement, and optionally further up to 1% by weight of air-entraining additives, flow-control agents and/or retarding agents.

2. The gypsum mortar composition according to claim 1, characterized in that said calcium sulfate predominantly consists of α-hemihydrate.

3. The gypsum mortar composition according to claim 1, characterized in that said calcium sulfate predominantly consists of anhydrite.

4. The gypsum mortar composition according to any of claims 1 to 3, characterized in that said alkali hydrogencarbonate is potassium hydrogencarbonate.

5. The gypsum mortar composition according to any of claims 1 to 4, characterized in that the grain size of said boric acid is the same or smaller than that of said calcium sulfate.

6. A process for the preparation of a foamed gypsum building material, characterized in that a dry gypsum mortar composition according to any of claims 1 to 5 is mixed with water and then cast or sprayed.

7. Use of a dry gypsum mortar composition according to any of claims 1 to 5 as a light-weight building material for insulation, back-filling and adjusting of unevennesses in the floor, wall and ceiling regions.

**Revendications**

1. Mélange sec de mortier de plâtre pour la fabrication d'un matériau de construction à base de plâtre, formé de 88 à 96 % en poids de sulfates de calcium aptes à présenter une prise, 2 à 9 % en poids d'un bicarbonate alcalin, 0,5 à 2 % en poids d'acide borique et 0,5 à 3 % en poids de chaux éteinte ou de ciment, ainsi qu'éventuellement, en outre, jusqu'à 1 % en poids d'entraîneurs d'air, de fluidifiants et/ou de retardateurs.

2. Mélange de mortier de plâtre selon la revendication 1, caractérisé en ce que le sulfate de calcium est formé essentiellement de semihydrate $\alpha$.

3. Mélange de mortier de plâtre selon la revendication 1, caractérisé en ce que le sulfate de calcium est formé essentiellement d'anhydrite.

4. Mélange de mortier de plâtre selon l'une des revendications 1 à 3, caractérisé en ce que le bicarbonate alcalin est le bicarbonate de potassium.

5. Mélange de mortier de plâtre selon l'une des revendications 1 à 4, caractérisé en ce que l'acide borique a une dimension de grains identique ou inférieure à celle du sulfate de calcium.

6. Procédé de fabrication d'un matériau de construction en plâtre expansé, caractérisé en ce qu'on délaie un mélange sec de mortier de plâtre selon l'une des revendications 1 à 5 avec de l'eau et, ensuite, on le coule ou on le pulvérise.

7. Utilisation d'un mélange sec de mortier de plâtre selon l'une des revendications 1 à 5 comme matériau de construction léger pour l'isolation thermique et phonique, le remplissage, ainsi que pour la compensation des creux et des bosses dans un plancher, une paroi et un plafond.